# EUROPEAN PATENT APPLICATION

(11) **EP 4 429 350 A1**
(43) Date of publication of application: **11.09.2024**
(21) Application number: 21962030.9
(22) Date of filing: 01.11.2021
(51) Int. Cl.: H04W 72/04

(54) **RESOURCE CONFIGURATION METHOD AND DEVICE, RESOURCE DETERMINATION METHOD AND DEVICE, COMMUNICATION DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/127998
(87) International publication number: WO 2023/070680

(57) **Abstract**

The present disclosure relates to a resource configuration method, comprising: receiving a random access message MsgA sent by a terminal; in response to a physical uplink shared channel (PUSCH) in the MsgA being not correctly acquired, determining resource allocation information according to configuration information of a first Initial UL BWP; and sending a fallback random access response (fallback RAR) to the terminal, wherein the fallback RAR carries the resource allocation information and is configured to instruct the terminal to send a random access message Msg3 to a base station according to the resource allocation information. According to the present disclosure, even if the base station does not correctly acquire the PUSCH in the MsgA, the terminal can reasonably configure the terminal to transmit the Msg3.

## Description

### FIELD

The present disclosure relates to the technical field of communication, and more particularly, to a resource configuration method, a resource determination method, a resource configuration apparatus, a resource determination apparatus, a communication device, and a computer readable storage medium.

### BACKGROUND

With the development of the communication technology, in order to adapt to new communication scenarios, a reduced capability terminal is provided, which is called a RedCap terminal for short, and may also be referred to as an NR-lite terminal. This kind of terminal generally is intended to meet conditions like low cost, low complexity, a certain degree of enhanced coverage, power saving, etc.

Due to certain differences between RedCap terminals and non-RedCap terminals, when accessing a network, in order to enable the network to determine the type of the terminal accessed, the RedCap terminal may carry information indicating its type when initiating a random access. For example, when initiating a two-step random access, a terminal may perform an early indication through a physical uplink shared channel (PUSCH) in a random access message MsgA, to indicate whether the terminal initiating the random access is a RedCap terminal.

If a base station does not correctly acquire the PUSCH in the MsgA, it can send a fallback random access response (fallback RAR) carrying configuration information to the terminal, so that the terminal sends a random access message Msg3 to the base station according to the configuration information. The Msg3 is a third message in a four-step random access process, and the content carried therein is the same as or similar to the PUSCH in the MsgA. However, in some scenarios, the base station cannot determine how to configure the terminal to send the Msg3.

### SUMMARY

In view of the above, embodiments of the present disclosure provide a resource configuration method, a resource determination method, a resource configuration apparatus, a resource determination apparatus, a communication device, and a computer readable storage medium to solve technical problems in the related art.

According to a first aspect of embodiments of the present disclosure, there is provided a resource configuration method, which is performed by a base station, and the base station configures an initial uplink bandwidth part (initial UL BWP) of a first type of terminal as a first initial UL BWP and configures an initial UL BWP of a second type of terminal as a second initial UL BWP. The resource configuration method includes: receiving a random access message MsgA sent by a terminal; in response to not correctly acquiring a physical uplink shared channel (PUSCH) in the MsgA, determining resource allocation information according to configuration information of the first initial UL BWP; and sending a fallback random access response (fallback RAR) to the terminal. The fallback RAR carries the resource allocation information and is used to indicate the terminal to send a random access message Msg3 to the base station according to the resource allocation information.

According to a second aspect of embodiments of the present disclosure, there is provided a resource determination method, which is performed by a terminal. The resource determination method includes: sending a MsgA to a base station, receiving a random access response (RAR) sent by the base station, in which the base station configures an initial UL BWP of a first type of terminal as a first initial UL BWP and configures an initial UL BWP of a second type of terminal as a second initial UL BWP; in response to the RAR received being a fallback RAR, acquiring resource allocation information from the fallback RAR, and analyzing the resource allocation information according to configuration information of the first initial UL BWP to determine a transmission resource; and sending a Msg3 to the base station with the transmission resource.

According to a third aspect of embodiments of the present disclosure, there is provided a resource configuration apparatus, which is applicable to a base station, and the base station configures an initial uplink bandwidth part (initial UL BWP) of a first type of terminal as a first initial UL BWP and configures an initial UL BWP of a second type of terminal as a second initial UL BWP. The apparatus includes: one or more processors configured to: receive a random access message MsgA sent by a terminal; in response to not correctly acquiring a physical uplink shared channel (PUSCH) in the MsgA, determine resource allocation information according to configuration information of the first initial UL BWP; and send a fallback random access response (fallback RAR) to the terminal. The fallback RAR carries the resource allocation information and is used to indicate the terminal to send a random access message Msg3 to the base station according to the resource allocation information.

According to a fourth aspect of embodiments of the present disclosure, there is provided a resource determination apparatus, which includes: one or more processors configured to: send a MsgA to a base station, receive a random access response (RAR) sent by the base station, in which the base station configures an initial UL BWP of a first type of terminal as a first initial UL BWP and configures an initial UL BWP of a second type of terminal as a second initial UL BWP; in response to the RAR received being a fallback RAR, acquire resource allocation information from the fallback RAR, and analyze the resource allocation information according to configuration information of the first initial UL BWP to determine a transmission resource; and send a Msg3 to the base station with the transmission resource.

According to a fifth aspect of embodiments of the present disclosure, there is provided a communication device, which includes: a processor; and a memory for storing a computer program. When the computer program is executed by the processor, the resource configuration method as described above is implemented.

According to a sixth aspect of embodiments of the present disclosure, there is provided a communication device, which includes: a processor; and a memory for storing a computer program. When the computer program is executed by the processor, the resource determination method as described above is implemented.

According to a seventh aspect of embodiments of the present disclosure, there is provided a computer-readable storage medium for storing a computer program that, when executed by a processor, causes steps in the resource configuration method as described above to be implemented.

According to an eighth aspect of embodiments of the present disclosure, there is provided a computer-readable storage medium for storing a computer program that, when executed by a processor, causes steps in the resource determination method as described above to be implemented.

According to embodiments of the present disclosure, in a case where the base station does not correctly acquire the PUSCH in the MsgA, it may default that the terminal needs to send the Msg3 on the first initial UL BWP, so that the base station determines the resource allocation information according to the configuration information of the first initial UL BWP, and sends the resource allocation information to the terminal by carrying it in the fallback RAR.

Further, after receiving the RAR, if the terminal determines that the RAR is the fallback RAR, and obtains the resource allocation information from the fallback RAR, no matter what type the terminal itself is, the terminal needs to send the Msg3 on the first initial UL BWP by default. Therefore, the terminal analyzes the resource allocation information according to the configuration information of the first initial UL BWP to determine the transmission resource, and sends the Msg3 with the determined transmission resource. The Msg3 transmitted may or may not perform an early indication, which may be specifically set as required.

Therefore, although the base station does not correctly acquire the PUSCH in the MsgA, and does not determine whether the terminal sending the MsgA is the RedCap terminal, it can default that the terminal needs to send the Msg3 on the first initial UL BWP, and after receiving the fallback RAR, the terminal can also default that it needs to send the Msg3 on the first initial UL BWP, so that the base station can process the transmission resource according to the configuration information of the first initial UL BWP to obtain the resource allocation information, and the terminal can analyze the resource allocation information according to the configuration information of the first initial UL BWP to determine the transmission resource, and complete the transmission of the Msg3 with the determined transmission resource.

### BRIEF DESCRIPTION OF THE DRAWINGS

In order to illustrate technical solutions in embodiments of the present disclosure more clearly, accompanying drawings to be used in the description of embodiments will be briefly introduced below. Apparently, the drawings in the following description only show some embodiments of the present disclosure. For those ordinarily skilled in the art, other drawings may also be obtained according to these drawings without any creative effort.
FIG. 1 is a schematic flowchart showing a resource configuration method according to embodiments of the present disclosure.
FIG. 2 is a schematic flowchart showing another resource configuration method according to embodiments of the present disclosure.
FIG. 3 is a schematic flowchart showing yet another resource configuration method according to embodiments of the present disclosure.
FIG. 4 is a schematic flowchart showing yet another resource configuration method according to embodiments of the present disclosure.
FIG. 5 is a schematic flowchart showing a resource determination method according to embodiments of the present disclosure.
FIG. 6 is a schematic flowchart showing another resource determination method according to embodiments of the present disclosure.
FIG. 7 is a schematic flowchart showing yet another resource determination method according to embodiments of the present disclosure.
FIG. 8 is a schematic flowchart showing yet another resource determination method according to embodiments of the present disclosure.
FIG. 9 is a schematic block diagram showing a device for resource configuration according to embodiments of the present disclosure.
FIG. 10 is a schematic block diagram showing a device for resource determination according to embodiments of the present disclosure.

### DETAILED DESCRIPTION

Technical solutions in embodiments of the present disclosure will be described clearly and thoroughly below with reference to accompanying drawings in embodiments of the present disclosure. Apparently, the embodiments described herein are only some embodiments, rather than all embodiments of the present disclosure. All other embodiments obtained by those ordinarily skilled in the art based on embodiments described herein without creative labors shall belong to the protection scope of the present disclosure.

Terms used in embodiments of the present disclosure are only for the purpose of describing specific embodiments, and not intended to limit embodiments of the present disclosure. As used in embodiments of the present disclosure and the appended claims, "a/an" and "the" in a singular form are intended to include plural forms, unless clearly indicated in the context otherwise. It also should be understood that, the term "and/or" used herein represents and includes any or all possible combinations of one or more associated items listed.

It should be understood that even though terms such as "first," "second" and "third" may be used in embodiments of the present disclosure for describing various information, these information should not be limited by these terms. These terms are only used for distinguishing information of the same type from each other. For example, first information may also be referred to as second information, and similarly, second information may also be referred to as first information, without departing from the scope of embodiments of the present disclosure. Depending on the context, the term "if' as used herein may be construed as "when", "upon" or "in response to determining".

For the purposes of brevity and ease of understanding, terms "greater than" or "less than", "higher than" or "lower than" are used herein for indicating a size relationship. However, it may be understood for a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

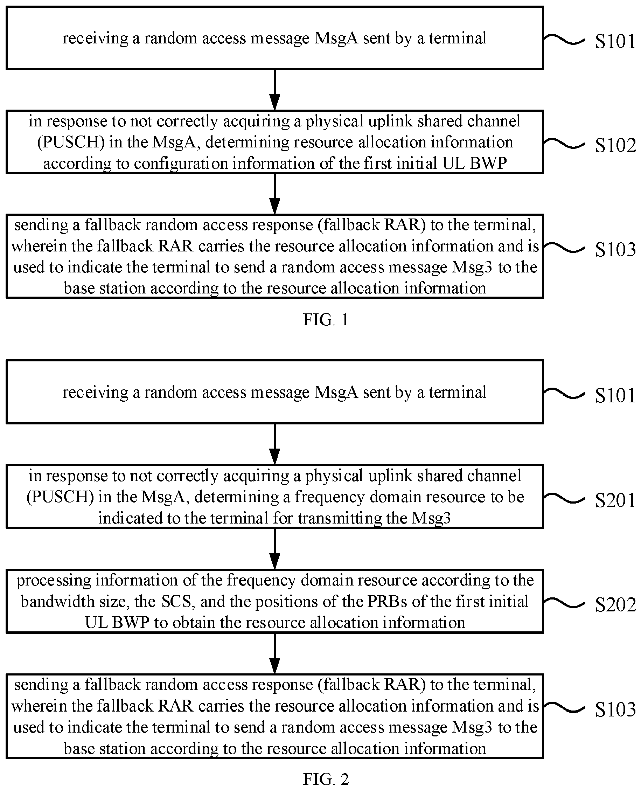

FIG. 1 is a schematic flowchart showing a resource configuration method according to embodiments of the present disclosure. The resource configuration method shown in these embodiments may be performed by a base station, and the base station can communicate with a terminal (for example, as a user equipment, UE). The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

As shown in FIG. 1, the resource configuration method may include the following steps.

In step S101, a random access message MsgA sent by a terminal is received.

In step S102, in response to not correctly acquiring a physical uplink shared channel (PUSCH) in the MsgA, resource allocation information is determined according to configuration information of the first initial UL BWP.

In step S 103, a fallback random access response (fallback RAR) is sent to the terminal. The fallback RAR carries the resource allocation information and is used to indicate the terminal to send a random access message Msg3 to the base station according to the resource allocation information.

In the above embodiment, the base station configures an initial UL BWP of a first type of terminal as a first initial UL BWP and configures an initial UL BWP of a second type of terminal as a second initial UL BWP. In an embodiment, the first type of terminal includes a non-reduced capability (RedCap) terminal, and the second type of terminal includes a RedCap terminal.

The solution of embodiments of the present disclosure may be that: the base station receives the random access message MsgA sent by the terminal; determines resource allocation information according to configuration information of the second initial UL BWP, in response to determining that the terminal is a second type of terminal (RedCap terminal); and sends the fallback random access response (fallback RAR) to the terminal, and the fallback RAR carries the resource allocation information and is used to indicate the terminal to send the random access message Msg3 to the base station according to the resource allocation information.

The solution of embodiments of the present disclosure may also be that: the base station receives the random access message MsgA sent by the terminal; determines the resource allocation information according to the configuration information of the first initial UL BWP, in response to being unable to determine the type of the terminal; and sends the fallback random access response (fallback RAR) to the terminal, and the fallback RAR carries the resource allocation information and is used to indicate the terminal to send the random access message Msg3 to the base station according to the resource allocation information.

In other words, if it can be determined that the terminal initiating the random access is the RedCap terminal, the resource allocation information is determined according to the configuration information of the second initial UL BWP. If the type of the terminal initiating the random access cannot be determined, the resource allocation information is determined according to the configuration information of the first initial UL BWP by default.

In embodiments of the present disclosure, the base station can determine the type of the terminal according to the MsgA. That is, if the physical uplink shared channel (PUSCH) can be correctly acquired (e.g., correctly demodulated) from the MsgA, the type of the terminal can be determined.

In an embodiment, the terminal may initiate a random access, such as a two-step random access or a four-step random access, to the base station to access the base station.

In a four-step random access process, the terminal first sends a random access message Msg1 to the terminal, and the random access message Msg1 carries a physical random access channel (PRACH) preamble.

After detecting the preamble, the base station sends a random access response (RAR) to the terminal, and the random access response (RAR) may also be called a random access message Msg2. The RAR may carry an identifier (ID) of the preamble detected, a timing advance related command, and a temporary cell-radio network temporary identifier (C-RNTI, also called TC-RNTI), and may also carry the resource allocation information, and the resource allocation information is used to indicate a resource for the terminal to send a random access message Msg3.

After receiving the RAR, the terminal may send the Msg3 to the base station. In a possible implementation, the Msg3 is mainly related to the PUSCH, and specific content carried in it is not fixed and depends on actual scenes.

After receiving the Msg3, the base station uses a contention resolution identity ID to send a contention resolution message to the terminal, and the contention resolution message may be called a random access message Msg4.

After receiving the Msg4, the terminal acquires the contention resolution identity ID therein, and sends an acknowledgement message to the base station on a physical uplink control channel (PUCCH) to complete the four-step random access process.

It can be seen that the four-step access process requires at least two cycles of round-trip communications between the terminal and the base station, which will increase the latency of the access process to a certain extent, and generate additional signaling overhead. Therefore, in some cases, these problems can be alleviated by the two-step random access.

In a two-step random access process, the terminal sends a random access message MsgA to the base station. The MsgA is composed of a PRACH preamble and a PUSCH, and equivalent to the Msg1 and Msg3 in the four-step random access process. The MsgA may be transmitted in a PRACH occasion (PO) for transmitting the Msg1 in the four-step random access process, or may be transmitted in a separate PO, such as a PO dedicated to the two-step random access.

After receiving the MsgA, the base station sends a MsgB to the terminal. The MsgB includes a random access response and a contention resolution message, and is equivalent to the Msg2 and Msg4 in the four-step random access process.

It can be seen that the two-step random access process can reduce interactions between the base station and the terminal in the access process, which is beneficial to reducing the latency of the access process and saving the signaling overhead. For example, when the terminal communicates with the base station in an unauthorized frequency band, since the two-step random access process requires fewer interactions, it is beneficial to reducing the number of Listen Before Talk (LBT) attempts in the unauthorized frequency band.

In the two-step random access process, after the terminal sends the MsgA, there exist three cases with respect to receiving the MsgB sent by the base station as follows.

In case 1, the base station does not detect the PRACH preamble in the MsgA, and thus does not send a response to the terminal, and therefore does not send the MsgB to the terminal. The terminal does not receive the MsgB after waiting, and then may resend the MsgA or fall back to the four-step random access process to send the Msg1.

In case 2, the base station detects the PRACH preamble in the MsgA, but fails to correctly decode the PUSCH in the MsgA, then it may send a fallback RAR to the terminal. The fallback RAR carries at least the resource allocation information, such as an uplink grant (UL grant), to indicate a resource for the terminal to transmit the Msg3. After receiving the fallback RAR, the terminal may send the Msg3 according to the resource indicated, which is equivalent to falling back to the four-step random access process.

In case 3, the base station detects the PRACH preamble in the MsgA and correctly decodes the PUSCH in the MsgA, and may return the MsgB to the terminal. The MsgB may carry a success random access response (success RAR), and the success RAR may carry the contention resolution identity ID, the C-RNTI, the timing advance command, etc. After receiving the MsgB, the terminal can determine that the two-step random access process has been successfully completed.

For the RedCap terminal, in order to enable the network to determine the type of the terminal as soon as possible, when initiating the two-step random access process, the RedCap terminal can perform an early indication through the PUSCH in the MsgA. The indication may be an explicit indication or an implicit indication to indicate the type of the terminal initiating the random access, for example, to indicate whether the terminal initiating the random access is a RedCap terminal.

In addition, since both legacy terminals (i.e., non-reduced capability (Non-RedCap) terminals) and reduced capability (RedCap) terminals may exist in the network, in order to avoid conflicts between terminals of different types when initiating the random access, the base station may configure different initial uplink bandwidth parts (initial UL BWPs) for the RedCap terminals and the non-RedCap terminals, so that the RedCap terminals and the non-RedCap terminals can use different initial UL BWPs to initiate the random access, respectively.

For the convenience of description below, the initial UL BWP configured by the base station for the non-RedCap terminal is called the first initial UL BWP, and the initial UL BWP configured by the base station for the RedCap terminal is called the second initial UL BWP. The first initial UL BWP is different from the second initial UL BWP.

In all embodiments of the present disclosure, the difference between the first initial UL BWP and the second initial UL BWP may illustratively include one or more of the following situations:
a broadband width of the first initial UL BWP is different from that of the second initial UL BWP;
a starting position and/or an ending position of the first initial UL BWP is/are different from that of the second initial UL BWP.

In some possible implementations, the first initial UL BWP may have an overlapped part with the second initial UL BWP, the first initial UL BWP and the second initial UL BWP do not overlap at all, the first initial UL BWP is completely included in the second initial UL BWP, or the second initial UL BWP is completely included in the first initial UL BWP.

In a possible implementation, the initial UL BWP configured for the RedCap terminal is called the first initial UL BWP, which is exclusively used by the RedCap terminal. The initial UL BWP configured for the non-RedCap terminal is called the second initial UL BWP, which may be configured for the RedCap terminal to use, and may also be configured for the non-RedCap terminal to use.

In this case, for the above case 2 of the two-step random access, the base station does not correctly acquire the PUSCH in the MsgA, and cannot correctly acquire the early indication, and thus cannot determine the type of the terminal initiating the random access, so that the base station cannot determine whether to configure the first initial UL BWP or the second initial UL BWP for the terminal to send the Msg3. Of course, not correctly acquiring the PUSCH in the MsgA is only one of cases that trigger the transmission of the fallback RAR. Those skilled in the art can understand that the base stations can trigger the transmission of the fallback RAR based on a communication protocol or other conditions, which is not limited in embodiments of the present disclosure.

According to embodiments of the present disclosure, the base station may require the terminal to send the Msg3 on the first initial UL BWP, so that the base station determines the resource allocation information according to the configuration information of the first initial UL BWP, and carries the resource allocation information in the fallback RAR and send it to the terminal. For example, when the base station cannot determine the type of the terminal sending the MsgA, the base station configures by default that the terminal sends the Msg3 on the first initial UL BWP. If it can be determined that the terminal sending the MsgA is the RedCap terminal, the terminal may be configured to send the Msg3 on the first initial UL BWP, or the terminal may be configured to send the Msg3 on the second initial UL BWP. Of course, since the second initial UL BWP corresponds to the RedCap terminal, and the terminal may preferably be configured to send the Msg3 on the second initial UL BWP.

For example, the base station may first determine a transmission resource for the terminal to transmit the Msg3, and then process the determined transmission resource according to the configuration information of the first initial UL BWP to obtain the resource allocation information.

Further, after receiving the RAR, if the terminal determines that the RAR is the fallback RAR, and obtains the resource allocation information from the fallback RAR, no matter what type the terminal itself is, the terminal needs to send the Msg3 on the first initial UL BWP by default. Therefore, the terminal analyzes the resource allocation information according to the configuration information of the first initial UL BWP to determine the transmission resource, and sends the Msg3 with the determined transmission resource. The Msg3 transmitted may or may not perform an early indication, which may be specifically set as required.

Therefore, although the base station fails to determine whether the terminal sending the MsgA is the RedCap terminal, it can default that the terminal needs to send the Msg3 on the first initial UL BWP, and after receiving the fallback RAR, the terminal can also default that it needs to send the Msg3 on the first initial UL BWP, so that the base station can process the transmission resource according to the configuration information of the first initial UL BWP to obtain the resource allocation information, and the terminal can analyze the resource allocation information according to the configuration information of the first initial UL BWP to determine the transmission resource, and complete the transmission of the Msg3 with the determined transmission resource.

In addition, in general, legacy terminals (i.e., non-RedCap terminals) account for a relatively large proportion in the network. If the terminal sends the Msg3 on the second initial UL BWP by default, the base station will process the transmission resource according to the configuration information of the second initial UL BWP to obtain the resource allocation information. Correspondingly, if the terminal initiating the random access is the non-RedCap terminal, it is necessary for non-RedCap terminal to analyze the resource allocation information according to the configuration information of the second initial UL BWP to determine the transmission resource. However, currently, the non-RedCap terminal analyzes the resource allocation information according to the configuration information of the first initial UL BWP by default. If the non-RedCap terminal is adjusted to analyze the resource allocation information according to the configuration information of the second initial UL BWP to determine the transmission resource, a large number of legacy terminals need to be adjusted, which is too difficult to implement.

However, as a new type of terminal, the number of RedCap terminals in the network is relatively small. Although the RedCap terminal currently analyzes the resource allocation information according to the configuration information of the second initial UL BWP by default, if it is adjusted to analyze the resource allocation information according to the configuration information of the first initial UL BWP, the number of terminals that need to be adjusted is not large, and the implementation is relatively easy.

In an embodiment, for a case where the two-step random access is successful, the base station correctly acquires (for example, correctly demodulates) the PUSCH in the MsgA, and thus can determine the type of the terminal.

In the case where the type of terminal is determined to be the RedCap terminal, the resource allocation information can be determined according to the configuration information of the second initial UL BWP, and sent to the terminal by carrying it in the success RAR. When the RedCap terminal determines that the success RAR is received, the RedCap terminal analyzes the resource allocation information according to the configuration information of the second initial UL BWP to determine the transmission resource.

In the case where the type of terminal is determined to be the non-RedCap terminal, the resource allocation information can be determined according to the configuration information of the first initial UL BWP, and sent to the terminal by carrying it in the success RAR. When the non-RedCap terminal determines that the success RAR is received, the non-RedCap terminal analyzes the resource allocation information according to the configuration information of the first initial UL BWP to determine the transmission resource.

In an embodiment, the configuration information of the first initial UL BWP includes at least one of:
a bandwidth size of the first initial UL BWP;
a subcarrier spacing (SCS) of the first initial UL BWP; or
positions of physical resource blocks (PRBs) of the first initial UL BWP.

In an embodiment, regarding the configuration information of the first initial UL BWP and the configuration information of the second initial UL BWP, they may be stored by the terminal in advance, for example, they may be specified by a communication protocol, or they may be broadcast by the base station, for example, they may be carried in system information to broadcast.

In an embodiment, the transmission resource required by the terminal to transmit the Msg3 may include at least one of a frequency domain resource, a time domain resource, or a frequency hopping (such as intra-slot frequency hopping) transmission scheme. In the following, determining the resource allocation information according to the configuration information of the first initial UL BWP will be described with reference to these three cases.

FIG. 2 is a schematic flowchart showing another resource configuration method according to embodiments of the present disclosure. As shown in FIG. 2, determining the resource allocation information according to the configuration information of the first initial UL BWP includes the following steps.

In step S201, a frequency domain resource to be indicated to the terminal for transmitting the Msg3 is determined.

In step S202, information of the frequency domain resource is processed according to the bandwidth size of the first initial UL BWP, the SCS of the first initial UL BWP, and the positions of the PRBs of the first initial UL BWP to obtain the resource allocation information.

In an embodiment, the base station may first determine the frequency domain resource for the terminal to transmit the Msg3, and then process the information of the frequency domain resource according to the bandwidth size, the SCS and the positions of the PRBs of the first initial UL BWP to obtain the resource allocation information.

For example, the frequency domain resource determined is a 10M bandwidth, and the bandwidth size, the SCS and the positions of the PRBs of the first initial UL BWP can play a role in defining the 10M bandwidth, to define a starting position and an ending position of the 10M bandwidth in the frequency domain. For example, the frequency domain resource may be determined to be a 10M bandwidth within a bandwidth range of the first initial UL BWP.

Further, after receiving the resource allocation information, the terminal may analyze the resource allocation information according to the bandwidth size, the SCS and the positions of the PRBs of the first initial UL BWP to determine the frequency domain resource used for transmitting the Msg3. For example, the resource allocation information indicates a PRB sequence number corresponding to the starting position of the frequency domain resource and a PRB sequence number corresponding to the ending position of the frequency domain resource. According to the positions of the PRBs of the first initial UL BWP, the terminal can determine positions of PRBs respectively corresponding to the PRB sequence number corresponding to the starting position of the frequency domain resource and the PRB sequence number corresponding to the ending position of the frequency domain resource in the positions of the PRBs of the first initial UL BWP, and determine a resource corresponding to the determined PRB positions in the frequency domain as the frequency domain resource. It should be noted that, the embodiments shown in FIG. 2 may be implemented together with any embodiment of the present disclosure, or may be implemented separately, which is not limited here.

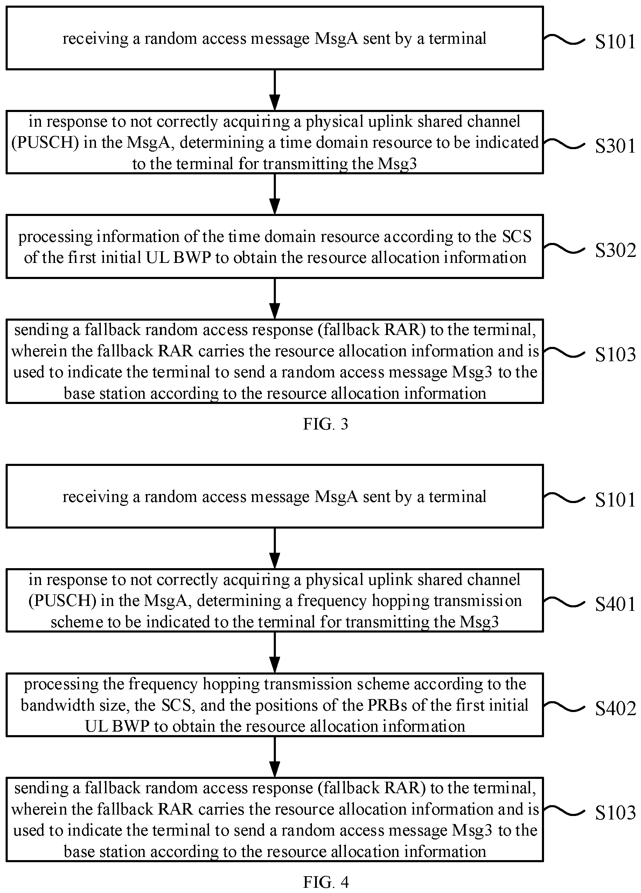

FIG. 3 is a schematic flowchart showing yet another resource configuration method according to embodiments of the present disclosure. As shown in FIG. 3, determining the resource allocation information according to the configuration information of the first initial UL BWP includes the following steps.

In step S301, a time domain resource to be indicated to the terminal for transmitting the Msg3 is determined.

In step S302, information of the time domain resource is processed according to the SCS of the first initial UL BWP to obtain the resource allocation information.

In an embodiment, the base station may first determine the time domain resource for the terminal to transmit the Msg3, and then process the information of the time domain resource according to the SCS of the first initial UL BWP to obtain the resource allocation information.

For example, the time domain resource determined includes 5 time domain symbols, and the SCS of the first initial UL BWP can play a role in defining the 5 time domain symbols. For example, a relatively large SCS corresponds to a shorter time-domain symbol, and a relatively large SCS corresponds to a longer time-domain symbol.

Further, after receiving the resource allocation information, the terminal may analyze the resource allocation information according to the SCS of the first initial UL BWP, to determine the time domain resources used for transmitting the Msg3. For example, the resource allocation information indicates a number of symbols corresponding to the time domain resource. The terminal can determine a size of each symbol according to the SCS of the first initial UL BWP, and then determine the length of the time domain resource according to the size of each symbol and the number of symbols. It should be noted that, the embodiments shown in FIG. 3 may be implemented together with any embodiment of the present disclosure, or may be implemented separately, which is not limited here.

FIG. 4 is a schematic flowchart showing yet another resource configuration method according to embodiments of the present disclosure. As shown in FIG. 4, determining the resource allocation information according to the configuration information of the first initial UL BWP includes the following steps.

In step S401, a frequency hopping transmission scheme to be indicated to the terminal for transmitting the Msg3 is determined.

In step S402, the frequency hopping transmission scheme is processed according to the bandwidth size of the first initial UL BWP, the SCS of the first initial UL BWP, and the positions of the PRBs of the first initial UL BWP to obtain the resource allocation information.

In an embodiment, when the base station determines that the terminal needs to transmit the Msg3 in a frequency hopping manner, the terminal transmits the Msg3 in the frequency hopping manner, which means that the terminal can divide the Msg3 into a plurality of parts, such as two parts, one of which is transmitted starting from a first PRB, the other part is transmitted starting from a second PRB, the first PRB and the second PRB are not adjacent to each other, and an interval between the first PRB and the second PRB may be called an offset.

The base station may first determine the frequency hopping transmission scheme for the terminal to transmit the Msg3, and then process the frequency hopping transmission scheme according to the bandwidth size, the SCS, and the positions of the PRBs of the first initial UL BWP to obtain the resource allocation information.

For example, the offset of the frequency hopping transmission scheme determined is a 15M bandwidth, the bandwidth size, the SCS and the positions of the PRBs of the first initial UL BWP can play a role in defining the 15M bandwidth. For example, the 15M bandwidth may be limited within the range of the first initial UL BWP according to the bandwidth size of the first initial UL BWP, and PRBs corresponding to a starting position and an ending position of the frequency hopping transmission scheme in the first initial UL BWP can be determined according to the positions of the PRBs of the first initial UL BWP.

Further, after receiving the resource allocation information, the terminal may analyze the resource allocation information according to the bandwidth size of the first initial UL BWP, the SCS of the first initial UL BWP, and the positions of the PRBs of the first initial UL BWP to determine the frequency hopping transmission scheme used for transmitting the Msg3. For example, the resource allocation information indicates sequence numbers of a starting PRB and an ending PRB of the frequency hopping transmission. The terminal can determine positions of PRBs respectively corresponding to the sequence numbers of the starting PRB and the ending PRB according to the positions of the PRBs of the first initial UL BWP, and then determine the offset of the frequency hopping transmission scheme. It should be noted that, the embodiments shown in FIG. 3 may be implemented together with any embodiment of the present disclosure, or may be implemented separately, which is not limited here.

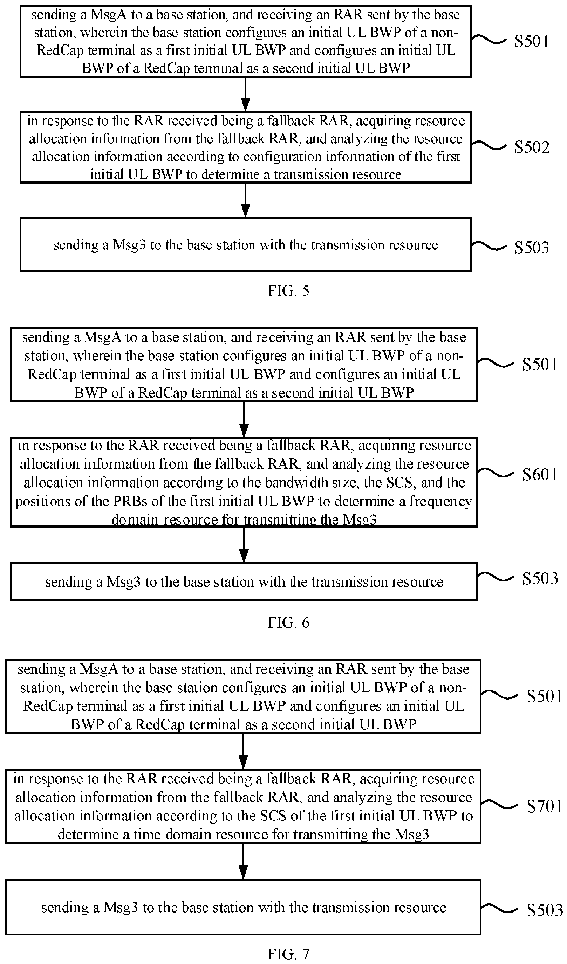

FIG. 5 is a schematic flowchart showing a resource determination method according to embodiments of the present disclosure. The resource determination method shown in these embodiments may be performed by a terminal, and the terminal (for example, as a user equipment, UE) can communicate with a base station. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

As shown in FIG. 5, the resource determination method may include the following steps.

In step S501, a MsgA is sent to a base station, and an RAR sent by the base station is received. The base station configures an initial UL BWP of a first type of terminal as a first initial UL BWP and configures an initial UL BWP of a second type of terminal as a second initial UL BWP.

In step S502, in response to the RAR received being a fallback RAR, resource allocation information is acquired from the fallback RAR, and the resource allocation information is analyzed according to configuration information of the first initial UL BWP to determine a transmission resource.

In step S503, with the transmission resource, a Msg3 is sent to the base station.

In the above embodiment, the base station configures an initial UL BWP of a first type of terminal as a first initial UL BWP and configures an initial UL BWP of a second type of terminal as a second initial UL BWP. In an embodiment, the first type of terminal includes a non-reduced capability (RedCap) terminal, and the second type of terminal includes a RedCap terminal.

The solution of embodiments of the present disclosure may be that: the base station receives the random access message MsgA sent by the terminal; determines resource allocation information according to configuration information of the second initial UL BWP, in response to determining that the terminal is a second type of terminal (RedCap terminal); and sends the fallback random access response (fallback RAR) to the terminal, and the fallback RAR carries the resource allocation information and is used to indicate the terminal to send the random access message Msg3 to the base station according to the resource allocation information.

The solution of embodiments of the present disclosure may also be that: the base station receives the random access message MsgA sent by the terminal; determines the resource allocation information according to the configuration information of the first initial UL BWP, in response to being unable to determine the type of the terminal; and sends the fallback random access response (fallback RAR) to the terminal, and the fallback RAR carries the resource allocation information and is used to indicate the terminal to send the random access message Msg3 to the base station according to the resource allocation information.

In other words, if it can be determined that the terminal initiating the random access is the RedCap terminal, the resource allocation information is determined according to the configuration information of the second initial UL BWP. If the type of the terminal initiating the random access cannot be determined, the resource allocation information is determined according to the configuration information of the first initial UL BWP by default.

In embodiments of the present disclosure, the base station can determine the type of the terminal according to the MsgA. That is, if the physical uplink shared channel (PUSCH) can be correctly acquired (e.g., correctly demodulated) from the MsgA, the type of the terminal can be determined.

In an embodiment, the terminal may initiate a random access, such as a two-step random access or a four-step random access, to the base station to access the base station.

In a four-step random access process, the terminal first sends a random access message Msg1 to the terminal, and the random access message Msg1 carries a physical random access channel (PRACH) preamble.

After detecting the preamble, the base station sends a random access response (RAR) to the terminal, and the random access response (RAR) may also be called a random access message Msg2. The RAR may carry an identifier (ID) of the preamble detected, a timing advance related command, and a temporary cell-radio network temporary identifier (C-RNTI, also called TC-RNTI), and may also carry the resource allocation information, and the resource allocation information is used to indicate a resource for the terminal to send a random access message Msg3.

After receiving the RAR, the terminal may send the Msg3 to the base station. In a possible implementation, the Msg3 is mainly related to the PUSCH, and specific content carried in it is not fixed and depends on actual scenes.

After receiving the Msg3, the base station uses a contention resolution identity ID to send a contention resolution message to the terminal, and the contention resolution message may be called a random access message Msg4.

After receiving the Msg4, the terminal acquires the contention resolution identity ID therein, and sends an acknowledgement message to the base station on a physical uplink control channel (PUCCH) to complete the four-step random access process.

It can be seen that the four-step access process requires at least two cycles of round-trip communications between the terminal and the base station, which will increase the latency of the access process to a certain extent, and generate additional signaling overhead. Therefore, in some cases, these problems can be alleviated by the two-step random access.

In a two-step random access process, the terminal sends a random access message MsgA to the base station. The MsgA is composed of a PRACH preamble and a PUSCH, and equivalent to the Msg1 and Msg3 in the four-step random access process. The MsgA may be transmitted in a PRACH occasion (PO) for transmitting the Msg1 in the four-step random access process, or may be transmitted in a separate PO, such as a PO dedicated to the two-step random access.

After receiving the MsgA, the base station sends a MsgB to the terminal. The MsgB includes a random access response and a contention resolution message, and is equivalent to the Msg2 and Msg4 in the four-step random access process.

It can be seen that the two-step random access process can reduce interactions between the base station and the terminal in the access process, which is beneficial to reducing the latency of the access process and saving the signaling overhead. For example, when the terminal communicates with the base station in an unauthorized frequency band, since the two-step random access process requires fewer interactions, it is beneficial to reducing the number of Listen Before Talk (LBT) attempts in the unauthorized frequency band.

In the two-step random access process, after the terminal sends the MsgA, there exist three cases with respect to receiving the MsgB sent by the base station as follows.

In case 1, the base station does not detect the PRACH preamble in the MsgA, and thus does not send a response to the terminal, and therefore does not send the MsgB to the terminal. The terminal does not receive the MsgB after waiting, and then may resend the MsgA or fall back to the four-step random access process to send the Msg1.

In case 2, the base station detects the PRACH preamble in the MsgA, but fails to correctly decode the PUSCH in the MsgA, then it may send a fallback RAR to the terminal. The fallback RAR carries at least the resource allocation information, such as an uplink grant (UL grant), to indicate a resource for the terminal to transmit the Msg3. After receiving the fallback RAR, the terminal may send the Msg3 according to the resource indicated, which is equivalent to falling back to the four-step random access process.

In case 3, the base station detects the PRACH preamble in the MsgA and correctly decodes the PUSCH in the MsgA, and may return the MsgB to the terminal. The MsgB may carry a success random access response (success RAR), and the success RAR may carry the contention resolution identity ID, the C-RNTI, the timing advance command, etc. After receiving the MsgB, the terminal can determine that the two-step random access process has been successfully completed.

For the RedCap terminal, in order to enable the network to determine the type of the terminal as soon as possible, when initiating the two-step random access process, the RedCap terminal can perform an early indication through the PUSCH in the MsgA. The indication may be an explicit indication or an implicit indication to indicate the type of the terminal initiating the random access, for example, to indicate whether the terminal initiating the random access is a RedCap terminal.

In addition, since both legacy terminals (i.e., non-reduced capability (Non-RedCap) terminals) and reduced capability (RedCap) terminals may exist in the network, in order to avoid conflicts between terminals of different types when initiating the random access, the base station may configure different initial uplink bandwidth parts (initial UL BWPs) for the RedCap terminals and the non-RedCap terminals, so that the RedCap terminals and the non-RedCap terminals can use different initial UL BWPs to initiate the random access, respectively.

For the convenience of description below, the initial UL BWP configured by the base station for the non-RedCap terminal is called the first initial UL BWP, and the initial UL BWP configured by the base station for the RedCap terminal is called the second initial UL BWP. The first initial UL BWP is different from the second initial UL BWP.

In all embodiments of the present disclosure, the difference between the first initial UL BWP and the second initial UL BWP may illustratively include one or more of the following situations:
a broadband width of the first initial UL BWP is different from that of the second initial UL BWP;
a starting position and/or an ending position of the first initial UL BWP is/are different from that of the second initial UL BWP.

In some possible implementations, the first initial UL BWP may have an overlapped part with the second initial UL BWP, the first initial UL BWP and the second initial UL BWP do not overlap at all, the first initial UL BWP is completely included in the second initial UL BWP, or the second initial UL BWP is completely included in the first initial UL BWP.

In a possible implementation, the initial UL BWP configured for the RedCap terminal is called the first initial UL BWP, which is exclusively used by the RedCap terminal. The initial UL BWP configured for the non-RedCap terminal is called the second initial UL BWP, which may be configured for the RedCap terminal to use, and may also be configured for the non-RedCap terminal to use.

In this case, for the above case 2 of the two-step random access, the base station does not correctly acquire the PUSCH in the MsgA, and cannot correctly acquire the early indication, and thus cannot determine the type of the terminal initiating the random access, so that the base station cannot determine whether to configure the first initial UL BWP or the second initial UL BWP for the terminal to send the Msg3. Of course, not correctly acquiring the PUSCH in the MsgA is only one of cases that trigger the transmission of the fallback RAR. Those skilled in the art can understand that the base stations can trigger the transmission of the fallback RAR based on a communication protocol or other conditions, which is not limited in embodiments of the present disclosure.

According to embodiments of the present disclosure, the base station may require the terminal to send the Msg3 on the first initial UL BWP, so that the base station determines the resource allocation information according to the configuration information of the first initial UL BWP, and carries the resource allocation information in the fallback RAR and send it to the terminal. For example, when the base station cannot determine the type of the terminal sending the MsgA, the base station configures by default that the terminal sends the Msg3 on the first initial UL BWP. If it can be determined that the terminal sending the MsgA is the RedCap terminal, the terminal may be configured to send the Msg3 on the first initial UL BWP, or the terminal may be configured to send the Msg3 on the second initial UL BWP. Of course, since the second initial UL BWP corresponds to the RedCap terminal, and the terminal may preferably be configured to send the Msg3 on the second initial UL BWP.

For example, the base station may first determine a transmission resource for the terminal to transmit the Msg3, and then process the determined transmission resource according to the configuration information of the first initial UL BWP to obtain the resource allocation information.

Further, after receiving the RAR, if the terminal determines that the RAR is the fallback RAR, and obtains the resource allocation information from the fallback RAR, no matter what type the terminal itself is, the terminal needs to send the Msg3 on the first initial UL BWP by default. Therefore, the terminal analyzes the resource allocation information according to the configuration information of the first initial UL BWP to determine the transmission resource, and sends the Msg3 with the determined transmission resource. The Msg3 transmitted may or may not perform an early indication, which may be specifically set as required.

Therefore, although the base station fails to determine whether the terminal sending the MsgA is the RedCap terminal, it can default that the terminal needs to send the Msg3 on the first initial UL BWP, and after receiving the fallback RAR, the terminal can also default that it needs to send the Msg3 on the first initial UL BWP, so that the base station can process the transmission resource according to the configuration information of the first initial UL BWP to obtain the resource allocation information, and the terminal can analyze the resource allocation information according to the configuration information of the first initial UL BWP to determine the transmission resource, and complete the transmission of the Msg3 with the determined transmission resource.

In addition, in general, legacy terminals (i.e., non-RedCap terminals) account for a relatively large proportion in the network. If the terminal sends the Msg3 on the second initial UL BWP by default, the base station will process the transmission resource according to the configuration information of the second initial UL BWP to obtain the resource allocation information. Correspondingly, if the terminal initiating the random access is the non-RedCap terminal, it is necessary for non-RedCap terminal to analyze the resource allocation information according to the configuration information of the second initial UL BWP to determine the transmission resource. However, currently, the non-RedCap terminal analyzes the resource allocation information according to the configuration information of the first initial UL BWP by default. If the non-RedCap terminal is adjusted to analyze the resource allocation information according to the configuration information of the second initial UL BWP to determine the transmission resource, a large number of legacy terminals need to be adjusted, which is too difficult to implement.

However, as a new type of terminal, the number of RedCap terminals in the network is relatively small. Although the RedCap terminal currently analyzes the resource allocation information according to the configuration information of the second initial UL BWP by default, if it is adjusted to analyze the resource allocation information according to the configuration information of the first initial UL BWP, the number of terminals that need to be adjusted is not large, and the implementation is relatively easy.

In an embodiment, for a case where the two-step random access is successful, the base station correctly acquires (for example, correctly demodulates) the PUSCH in the MsgA, and thus can determine the type of the terminal.

In the case where the type of terminal is determined to be the RedCap terminal, the resource allocation information can be determined according to the configuration information of the second initial UL BWP, and sent to the terminal by carrying it in the success RAR. When the RedCap terminal determines that the success RAR is received, the RedCap terminal analyzes the resource allocation information according to the configuration information of the second initial UL BWP to determine the transmission resource.

In the case where the type of terminal is determined to be the non-RedCap terminal, the resource allocation information can be determined according to the configuration information of the first initial UL BWP, and sent to the terminal by carrying it in the success RAR. When the non-RedCap terminal determines that the success RAR is received, the non-RedCap terminal analyzes the resource allocation information according to the configuration information of the first initial UL BWP to determine the transmission resource.

In an embodiment, the configuration information of the first initial UL BWP includes at least one of:
a bandwidth size of the first initial UL BWP;
an SCS of the first initial UL BWP; or
positions of PRBs of the first initial UL BWP.

In an embodiment, regarding the configuration information of the first initial UL BWP and the configuration information of the second initial UL BWP, they may be stored by the terminal in advance, for example, they may be specified by a communication protocol, or they may be broadcast by the base station, for example, they may be carried in system information to broadcast.

In an embodiment, the transmission resource required by the terminal to transmit the Msg3 may include at least one of a frequency domain resource, a time domain resource, or a frequency hopping (such as intra-slot frequency hopping) transmission scheme. In the following, determining the resource allocation information according to the configuration information of the first initial UL BWP will be described with reference to these three cases.

FIG. 6 is a schematic flowchart showing another resource determination method according to embodiments of the present disclosure. As shown in FIG. 6, analyzing the resource allocation information according to the configuration information of the first initial UL BWP to determine the transmission resource includes a following step.

In step S601, the resource allocation information is analyzed according to the bandwidth size of the first initial UL BWP, the SCS of the first initial UL BWP, and the positions of the PRBs of the first initial UL BWP to determine a frequency domain resource for transmitting the Msg3.

In an embodiment, the base station may first determine the frequency domain resource for the terminal to transmit the Msg3, and then process the information of the frequency domain resource according to the bandwidth size, the SCS and the positions of the PRBs of the first initial UL BWP to obtain the resource allocation information.

For example, the frequency domain resource determined is a 10M bandwidth, and the bandwidth size, the SCS and the positions of the PRBs of the first initial UL BWP can play a role in defining the 10M bandwidth, to define a starting position and an ending position of the 10M bandwidth in the frequency domain. For example, the frequency domain resource may be determined to be a 10M bandwidth within a bandwidth range of the first initial UL BWP.

Further, after receiving the resource allocation information, the terminal may analyze the resource allocation information according to the bandwidth size, the SCS and the positions of the PRBs of the first initial UL BWP to determine the frequency domain resource used for transmitting the Msg3. For example, the resource allocation information indicates a PRB sequence number corresponding to the starting position of the frequency domain resource and a PRB sequence number corresponding to the ending position of the frequency domain resource. According to the positions of the PRBs of the first initial UL BWP, the terminal can determine positions of PRBs respectively corresponding to the PRB sequence number corresponding to the starting position of the frequency domain resource and the PRB sequence number corresponding to the ending position of the frequency domain resource in the positions of the PRBs of the first initial UL BWP, and determine a resource corresponding to the determined PRB positions in the frequency domain as the frequency domain resource. It should be noted that, the embodiments shown in FIG. 6 may be implemented together with any embodiment of the present disclosure, or may be implemented separately, which is not limited here.

FIG. 7 is a schematic flowchart showing yet another resource determination method according to embodiments of the present disclosure. As shown in FIG. 7, analyzing the resource allocation information according to the configuration information of the first initial UL BWP to determine the transmission resource includes a following step.

In step S701, the resource allocation information is analyzed according to the SCS of the first initial UL BWP to determine a time domain resource for transmitting the Msg3.

In an embodiment, the base station may first determine the time domain resource for the terminal to transmit the Msg3, and then process the information of the time domain resource according to the SCS of the first initial UL BWP to obtain the resource allocation information.

For example, the time domain resource determined includes 5 time domain symbols, and the SCS of the first initial UL BWP can play a role in defining the 5 time domain symbols. For example, a relatively large SCS corresponds to a shorter time-domain symbol, and a relatively large SCS corresponds to a longer time-domain symbol.

Further, after receiving the resource allocation information, the terminal may analyze the resource allocation information according to the SCS of the first initial UL BWP, to determine the time domain resources used for transmitting the Msg3. For example, the resource allocation information indicates a number of symbols corresponding to the time domain resource. The terminal can determine a size of each symbol according to the SCS of the first initial UL BWP, and then determine the length of the time domain resource according to the size of each symbol and the number of symbols. It should be noted that, the embodiments shown in FIG. 7 may be implemented together with any embodiment of the present disclosure, or may be implemented separately, which is not limited here.

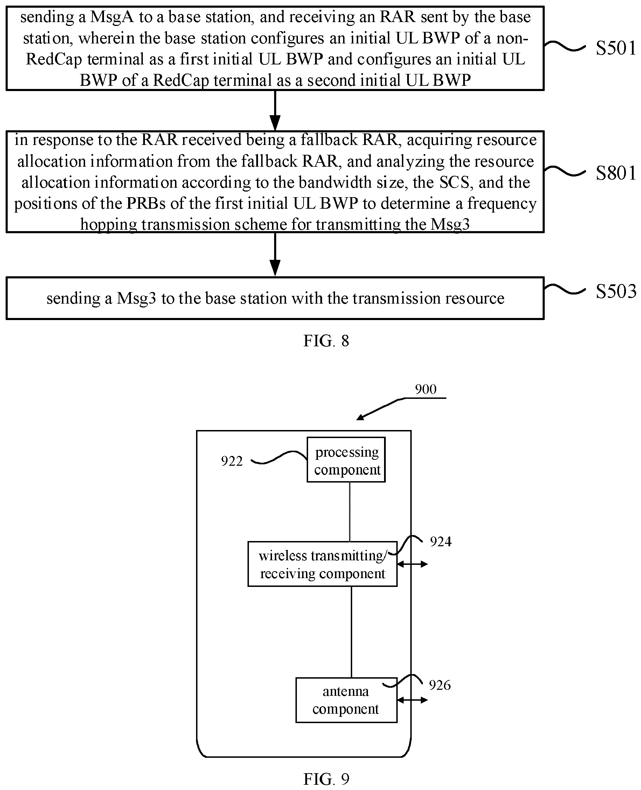

FIG. 8 is a schematic flowchart showing yet another resource determination method according to embodiments of the present disclosure. As shown in FIG. 8, analyzing the resource allocation information according to the configuration information of the first initial UL BWP to determine the transmission resource includes a following step.

In step S801, the resource allocation information is analyzed according to the bandwidth size of the first initial UL BWP, the SCS of the first initial UL BWP, and the positions of the PRBs of the first initial UL BWP to determine a frequency hopping transmission scheme for transmitting the Msg3.

In an embodiment, when the base station determines that the terminal needs to transmit the Msg3 in a frequency hopping manner, the terminal transmits the Msg3 in the frequency hopping manner, which means that the terminal can divide the Msg3 into a plurality of parts, such as two parts, one of which is transmitted starting from a first PRB, the other part is transmitted starting from a second PRB, the first PRB and the second PRB are not adjacent to each other, and an interval between the first PRB and the second PRB may be called an offset. It should be noted that, the embodiments shown in FIG. 8 may be implemented together with any embodiment of the present disclosure, or may be implemented separately, which is not limited here.

The base station may first determine the frequency hopping transmission scheme for the terminal to transmit the Msg3, and then process the frequency hopping transmission scheme according to the bandwidth size, the SCS, and the positions of the PRBs of the first initial UL BWP to obtain the resource allocation information.

For example, the offset of the frequency hopping transmission scheme determined is a 15M bandwidth, the bandwidth size, the SCS and the positions of the PRBs of the first initial UL BWP can play a role in defining the 15M bandwidth. For example, the 15M bandwidth may be limited within the range of the first initial UL BWP according to the bandwidth size of the first initial UL BWP, and PRBs corresponding to a starting position and an ending position of the frequency hopping transmission scheme in the first initial UL BWP can be determined according to the positions of the PRBs of the first initial UL BWP.

Further, after receiving the resource allocation information, the terminal may analyze the resource allocation information according to the bandwidth size of the first initial UL BWP, the SCS of the first initial UL BWP, and the positions of the PRBs of the first initial UL BWP to determine the frequency hopping transmission scheme used for transmitting the Msg3. For example, the resource allocation information indicates sequence numbers of a starting PRB and an ending PRB of the frequency hopping transmission. The terminal can determine positions of PRBs respectively corresponding to the sequence numbers of the starting PRB and the ending PRB according to the positions of the PRBs of the first initial UL BWP, and then determine the offset of the frequency hopping transmission scheme.

Corresponding to the foregoing embodiments of the resource configuration method and resource determination method, the present disclosure also provides embodiments of a resource configuration apparatus and a resource determination apparatus.

Embodiments of the present disclosure provide a resource configuration apparatus, which is applicable to a base station, and the base station can communicate with a terminal (for example, as a user equipment, UE). The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

The base station configures an initial uplink bandwidth part (initial UL BWP) of a first type of terminal as a first initial UL BWP and configures an initial UL BWP of a second type of terminal as a second initial UL BWP.

In an embodiment, the apparatus includes one or more processors configured to: receive a random access message MsgA sent by a terminal; determine resource allocation information according to configuration information of the first initial UL BWP in response to not correctly acquiring a physical uplink shared channel (PUSCH) in the MsgA; and send a fallback random access response (fallback RAR) to the terminal. The fallback RAR carries the resource allocation information and is used to indicate the terminal to send a random access message Msg3 to the base station according to the resource allocation information.

In an embodiment, the first type of terminal includes a non-reduced capability (RedCap) terminal, and the second type of terminal includes a RedCap terminal.

In an embodiment, the configuration information of the first initial UL BWP includes at least one of:
a bandwidth size of the first initial UL BWP;
a subcarrier spacing (SCS) of the first initial UL BWP; or
positions of physical resource blocks (PRBs) of the first initial UL BWP.

In an embodiment, the processor is configured to: determine a frequency domain resource to be indicated to the terminal for transmitting the Msg3; and process information of the frequency domain resource according to the bandwidth size of the first initial UL BWP, the SCS of the first initial UL BWP, and the positions of the PRBs of the first initial UL BWP to obtain the resource allocation information.

In an embodiment, the processor is configured to: determine a time domain resource to be indicated to the terminal for transmitting the Msg3; and process information of the time domain resource according to the SCS of the first initial UL BWP to obtain the resource allocation information.

In an embodiment, the processor is configured to: determine a frequency hopping transmission scheme to be indicated to the terminal for transmitting the Msg3; and process the frequency hopping transmission scheme according to the bandwidth size of the first initial UL BWP, the SCS of the first initial UL BWP, and the positions of the PRBs of the first initial UL BWP to obtain the resource allocation information.

Embodiments of the present disclosure provide a resource determination apparatus, which is applicable to a terminal, and the terminal (for example, as a user equipment, UE) can communicate with a base station. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

In an embodiment, the apparatus includes one or more processors configured to: send a MsgA to a base station, receive an RAR sent by the base station, in which the base station configures an initial UL BWP of a first type of terminal as a first initial UL BWP and configures an initial UL BWP of a second type of terminal as a second initial UL BWP; acquire resource allocation information from the fallback RAR in response to the RAR received being a fallback RAR, and analyze the resource allocation information according to configuration information of the first initial UL BWP to determine a transmission resource; and send a Msg3 to the base station with the transmission resource.

In an embodiment, the first type of terminal includes a non-reduced capability (RedCap) terminal, and the second type of terminal includes a RedCap terminal.

In an embodiment, the configuration information of the first initial UL BWP includes at least one of:
a bandwidth size of the first initial UL BWP;
an SCS of the first initial UL BWP; or
positions of PRBs of the first initial UL BWP.

In an embodiment, the processor is configured to: analyze the resource allocation information according to the bandwidth size of the first initial UL BWP, the SCS of the first initial UL BWP, and the positions of the PRBs of the first initial UL BWP to determine a frequency domain resource for transmitting the Msg3.

In an embodiment, the processor is configured to: analyze the resource allocation information according to the SCS of the first initial UL BWP to determine a time domain resource for transmitting the Msg3.

In an embodiment, the processor is configured to: analyze the resource allocation information according to the bandwidth size of the first initial UL BWP, the SCS of the first initial UL BWP, and the positions of the PRBs of the first initial UL BWP to determine a frequency hopping transmission scheme for transmitting the Msg3.

With respect to the apparatuses in the above embodiments, the specific manners of individual modules therein for performing operations have been described in detail in the embodiments of related methods, which will not be elaborated here.

As for the apparatus embodiments, since they are substantially correspond to the method embodiments, for related parts, reference is made to the partial description of the method embodiments. The above-described apparatus embodiments are merely illustrative, in which modules described as separate components may be or may not be physically separated, and components displayed as modules may be or may not be physical modules, that is, they may be located at one place or distributed to a plurality of network modules. Some or all of the modules may be selected as required to achieve the objects of embodiments of the present disclosure, and they could be understood and implemented by those skilled in the art without creative efforts.

Embodiments of the present disclosure also provide a communication device, which includes: a processor; and a memory for storing a computer program. When the computer program is executed by the processor, the resource configuration method as described in any embodiment above is implemented.

Embodiments of the present disclosure also provide a communication device, which includes: a processor; and a memory for storing a computer program. When the computer program is executed by the processor, the resource determination method as described in any embodiment above is implemented.

Embodiments of the present disclosure also provide a computer-readable storage medium for storing a computer program that, when executed by a processor, causes steps in the resource configuration method as described in any embodiment above to be implemented.

Embodiments of the present disclosure also provide a computer-readable storage medium for storing a computer program that, when executed by a processor, causes steps in the resource determination method as described in any embodiment above to be implemented.

As shown in FIG. 9, FIG. 9 is a schematic block diagram showing a device 900 for resource configuration according to embodiments of the present disclosure. The device 900 may be provided as a base station. Referring to FIG. 9, the device 900 includes a processing component 922, a wireless transmitting/receiving component 924, an antenna component 926, and a signal processing part specific to a wireless interface. The processing component 922 may further include one or more processors. One of the processors in the processing component 922 may be configured to implement the resource configuration method as described in any embodiment above.

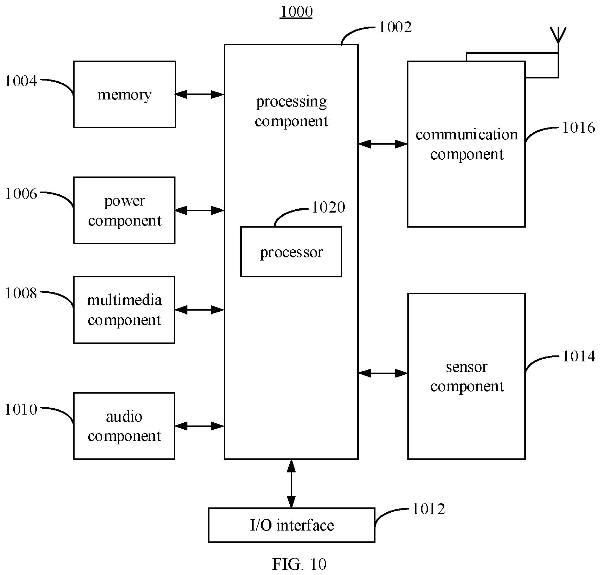

FIG. 10 is a schematic block diagram showing a device 1000 for resource determination according to embodiments of the present disclosure. For example, the device 1000 may be a mobile phone, a computer, a digital broadcast terminal, a messaging device, a gaming console, a tablet, a medical device, an exercise equipment, a personal digital assistant, and the like.

Referring to FIG. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or some of the steps in the above-described resource determination method. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, videos, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone (MIC) configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as keyboards, click wheels, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wireless, between the device 1000 and other devices. The device 1000 can access a wireless network based on a communication standard, such as WiFi, 2G, 3G, 4G LTE, 5G NR or a combination thereof. In an illustrative embodiment, the communication component 1016 receives a broadcast signal or broadcast associated information from an external broadcast management system via a broadcast channel. In an illustrative embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the resource determination method as described above.

In illustrative embodiments, there is also provided a non-transitory computer-readable storage medium including instructions, such as included in the memory 1004, executable by the processor 1020 in the device 1000, for performing the resource determination method as described above. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and apparatuses provided by embodiments of the present disclosure have been described in detail above, and specific examples are used to illustrate the principle and implementations of the present disclosure. The description of the above embodiments is only used to help understand the methods and core ideas of the present disclosure. At the same time, for those skilled in the art, some changes may be made in the specific implementations and application scope according to the idea of the present disclosure. In summary, the content of the specification should not be construed as a limitation on the present disclosure.

## Claims

1. A resource configuration method, performed by a base station which configures an initial uplink bandwidth part (initial UL BWP) of a first type of terminal as a first initial UL BWP and configures an initial UL BWP of a second type of terminal as a second initial UL BWP, comprising:
receiving a random access message MsgA sent by a terminal;
in response to not correctly acquiring a physical uplink shared channel (PUSCH) in the MsgA, determining resource allocation information according to configuration information of the first initial UL BWP; and
sending a fallback random access response (fallback RAR) to the terminal, wherein the fallback RAR carries the resource allocation information and is used to indicate the terminal to send a random access message Msg3 to the base station according to the resource allocation information.

2. The method according to claim 1, wherein the first type of terminal comprises a non-reduced capability (RedCap) terminal, and the second type of terminal comprises a RedCap terminal.

3. The method according to claim 1, wherein the configuration information of the first initial UL BWP comprises at least one of:
a bandwidth size of the first initial UL BWP;
a subcarrier spacing (SCS) of the first initial UL BWP; or
positions of physical resource blocks (PRBs) of the first initial UL BWP.

4. The method according to claim 3, wherein determining the resource allocation information according to the configuration information of the first initial UL BWP comprises:
determining a frequency domain resource to be indicated to the terminal for transmitting the Msg3; and
processing information of the frequency domain resource according to the bandwidth size of the first initial UL BWP, the SCS of the first initial UL BWP, and the positions of the PRBs of the first initial UL BWP to obtain the resource allocation information.

5. The method according to claim 3, wherein determining the resource allocation information according to the configuration information of the first initial UL BWP comprises:
determining a time domain resource to be indicated to the terminal for transmitting the Msg3; and
processing information of the time domain resource according to the SCS of the first initial UL BWP to obtain the resource allocation information.

6. The method according to claim 3, wherein determining the resource allocation information according to the configuration information of the first initial UL BWP comprises:
determining a frequency hopping transmission scheme to be indicated to the terminal for transmitting the Msg3; and
processing the frequency hopping transmission scheme according to the bandwidth size of the first initial UL BWP, the SCS of the first initial UL BWP, and the positions of the PRBs of the first initial UL BWP to obtain the resource allocation information.

7. A resource determination method, performed by a terminal, comprising:
sending a MsgA to a base station,
receiving a random access response (RAR) sent by the base station, wherein the base station configures an initial UL BWP of a first type of terminal as a first initial UL BWP and configures an initial UL BWP of a second type of terminal as a second initial UL BWP;
in response to the RAR received being a fallback RAR, acquiring resource allocation information from the fallback RAR, and analyzing the resource allocation information according to configuration information of the first initial UL BWP to determine a transmission resource; and
sending a Msg3 to the base station on the transmission resource.

8. The method according to claim 7, wherein the first type of terminal comprises a non-reduced capability (RedCap) terminal, and the second type of terminal comprises a RedCap terminal.

9. The method according to claim 7, wherein the configuration information of the first initial UL BWP comprises at least one of:
a bandwidth size of the first initial UL BWP;
a subcarrier spacing (SCS) of the first initial UL BWP; or
positions of physical resource blocks (PRBs) of the first initial UL BWP.

10. The method according to claim 7, wherein analyzing the resource allocation information according to the configuration information of the first initial UL BWP to determine the transmission resource comprises:
analyzing the resource allocation information according to the bandwidth size of the first initial UL BWP, the SCS of the first initial UL BWP, and the positions of the PRBs of the first initial UL BWP to determine a frequency domain resource for transmitting the Msg3.

11. The method according to claim 7, wherein analyzing the resource allocation information according to the configuration information of the first initial UL BWP to determine the transmission resource comprises:
analyzing the resource allocation information according to the SCS of the first initial UL BWP to determine a time domain resource for transmitting the Msg3.

12. The method according to claim 7, wherein analyzing the resource allocation information according to the configuration information of the first initial UL BWP to determine the transmission resource comprises:
analyzing the resource allocation information according to the bandwidth size of the first initial UL BWP, the SCS of the first initial UL BWP, and the positions of the PRBs of the first initial UL BWP to determine a frequency hopping transmission scheme for transmitting the Msg3.

13. A resource configuration apparatus, applicable to a base station which configures an initial uplink bandwidth part (initial UL BWP) of a first type of terminal as a first initial UL BWP and configures an initial UL BWP of a second type of terminal as a second initial UL BWP, comprising:
one or more processors configured to:
receive a random access message MsgA sent by a terminal;
in response to not correctly acquiring a physical uplink shared channel (PUSCH) in the MsgA, determine resource allocation information according to configuration information of the first initial UL BWP; and
send a fallback random access response (fallback RAR) to the terminal, wherein the fallback RAR carries the resource allocation information and is used to indicate the terminal to send a random access message Msg3 to the base station according to the resource allocation information.

14. A resource determination apparatus, comprising:
one or more processors configured to:
send a MsgA to a base station,
receive a random access response (RAR) sent by the base station, wherein the base station configures an initial UL BWP of a first type of terminal as a first initial UL BWP and configures an initial UL BWP of a second type of terminal as a second initial UL BWP;
in response to the RAR received being a fallback RAR, acquire resource allocation information from the fallback RAR, and analyze the resource allocation information according to configuration information of the first initial UL BWP to determine a transmission resource; and
send a Msg3 to the base station on the transmission resource.

15. A communication device, comprising:
a processor; and
a memory for storing a computer program;
wherein when the computer program is executed by the processor, the resource configuration method according to any one of claims 1 to 6 is implemented.

16. A communication device, comprising:
a processor; and
a memory for storing a computer program;
wherein when the computer program is executed by the processor, the resource determination method according to any one of claims 7 to 13 is implemented.

17. A computer-readable storage medium for storing a computer program that, when executed by a processor, causes steps in the resource configuration method according to any one of claims 1 to 6 to be implemented.

18. A computer-readable storage medium for storing a computer program that, when executed by a processor, causes steps in the resource determination method according to any one of claims 7 to 13 to be implemented.
